**Europäisches Patentamt**

**European Patent Office**

**Office européen des brevets**

(19)

(11) Veröffentlichungsnummer: **0 057 380**
**B1**

(12) # EUROPÄISCHE PATENTSCHRIFT

(45) Veröffentlichungstag der Patentschrift:
**10.12.86**

(51) Int. Cl.⁴: **A 01 F 7/06**, A 01 F 12/18

(21) Anmeldenummer: **82100400.9**

(22) Anmeldetag: **21.01.82**

(54) **Dresch- und Trenntrommel für einen nach dem Axialflussprinzip arbeitenden Mähdrescher.**

(30) Priorität: **30.01.81 US 229688**

(43) Veröffentlichungstag der Anmeldung:
**11.08.82 Patentblatt 82/32**

(45) Bekanntmachung des Hinweises auf die Patenterteilung:
**10.12.86 Patentblatt 86/50**

(84) Benannte Vertragsstaaten:
**BE DE FR GB IT**

(56) Entgegenhaltungen:
**DE - A - 2 233 019**
**DE - B - 2 064 190**
**DE - C - 950 249**
**US - A - 4 178 943**

(73) Patentinhaber: **DEERE & COMPANY, 1 John Deere Road, Moline Illinois 61265 (US)**

(72) Erfinder: **Hengen, Edward John, 531 Grant, Bettendorf Iowa 52722 (US)**
Erfinder: **Bassett, James Howard, 2420 Scott St., Davenport Iowa 52803 (US)**

(74) Vertreter: **Sartorius, Peter et al, DEERE & COMPANY European Office, Patent Department Postfach 503 Steubenstrasse 36-42, D-6800 Mannheim 1 (DE)**

ACTORUM AG

## Beschreibung

Die Erfindung bezieht sich auf eine Dresch- und Trenntrommel für einen nach dem Axialflussprinzip arbeitenden Mähdrescher mit einem zumindest teilweise Abscheideöffnungen und Führungselemente aufweisenden Dresch- und Trenntrommelgehäuse, in dem die Dresch- und Trenntrommel drehbar gelagert ist, die zahlreiche in Axial- und Umfangsrichtung mit Abstand zueinander angeordnete, in etwa aufrechtstehende Erntegutkontaktelemente aufweist, die mit auf der Dresch- und Trenntrommel vorgesehenen Trenn- bzw. Dreschelementen sowie mit den Führungselementen zusammenwirken und in Art einer Schneckenwendel auf der Dresch- und Trenntrommel, insbesondere in einem Bereich zwischen einem Aufnahmeteil und einem Abgabeteil der Dresch- und Trenntrommel, angeordnet sind.

Es ist eine Axialdreschmaschine für einen selbstfahrenden Mähdrescher bekannt (DE-B-2 064 190), die mit einer drehbar gelagerten Dreschtrommel ausgerüstet ist, auf der auf Lücke zueinander stehende, stachelartige Zahnelemente angeordnet sind, die sich über die gesamte Dreschzone erstrecken und das Erntegut auch in Axialrichtung des Dreschkorbes zum Austragende des Dreschkorbes fördern sollen. Die einen relativ grossen Abstand untereinander aufweisenden Zahnelemente ergeben jedoch keine zur Förderung des Erntegutes durchgehende Schneckenwendel, die das Erntegut in etwa in die gleiche Richtung fördern wie die Steigungslinie der Schneckenwendel.

Es ist eine Dresch- und Trenntrommel für einen nach dem Axialflussprinzip arbeitenden Mähdrescher nach dem Oberbegriff des Patentanspruches 1 bekannt (US-A-4 178 943), der mit zahlreichen am Aussenumfang des Dreschteiles der Dresch- und Trenntrommel vorgesehenen Dreschleisten ausgerüstet ist, die sich parallel zur Längsachse der Dresch- und Trenntrommel erstrecken. Zwischen den einzelnen Dreschleisten befinden sich mehrere hintereinander angeordnete Förderelemente, deren Förderflächen untereinander eine Schneckenwendel bilden und gegenläufig zur Drehrichtung der Dresch- und Trenntrommel angeordnet sind. Die einzelnen Förderelemente sind dabei so ausgerichtet, dass die Förderfläche des entsprechenden Förderelementes über ihre gesamte Länge auf einer Schneckenwendel liegt. Die spiralförmige Bewegungsbahn des Erntegutes verläuft gegensinnig zu der aus den Förderelementen gebildeten Schneckenwendel.

Der Erfindung liegt die Aufgabe zugrunde, die Dresch- und Trenntrommel mit den zugehörigen Förderelementen derart auszubilden und anzuordnen, dass bei Vermeidung einer Gutsstrangbildung eine optimale Förderleistung der Dresch- und Trenntrommel erzielt wird. Diese Aufgabe ist dadurch gelöst worden, dass die einzelnen in einer Reihe hintereinander angeordneten Erntegutkontaktelemente in Umlaufrichtung der Dresch- und Trenntrommel zeigen und die die einzelnen Erntegutkontaktelemente miteinander verbindende Linie eine negativ bzw. in Drehrichtung verlaufende Spirallinie bildet, so dass die durch die Erntegutkontaktelemente gebildete Schneckenwendel und die Bewegungsbahn des Erntegutes durch das Dresch- und Trenntrommelgehäuse gleichsinnig verlaufen. Durch die vorteilhafte Ausrichtung der einzelnen in Art einer Schneckenwendel am Aussenumfang der Dresch- und Trenntrommel angeordneten Erntegutkontaktelemente erhält man eine einwandfreie Förderung des Erntegutes durch das Dresch- und Trenngehäuse, da die durch die Erntegutkontaktelemente gebildete Schneckenwendel gleichsinnig zur Drehrichtung der Dresch- und Trenntrommel und somit zum Erntegutstrom verläuft, der durch das Dresch- und Trenntrommelgehäuse bewegt wird. Auf diese Weise kann die insbesondere bei Langstroh oder bei Mais auftretende Bildung des Gutsstranges vermieden werden, der sich bei Dresch- und Trenntrommeln mit einer anderen Anordnung der Förderelemente häufig gebildet hat. Die Bildung des Gutsstranges wird ferner dadurch verhindert, dass die einzelnen Förderflächen so ausgerichtet sind, dass der Steigungswinkel der spiralförmig verlaufenden Bewegungsbahn des Erntegutes in etwa gleich dem Steigungswinkel der in Art einer Schneckenwendel angeordneten Erntegutkontaktelemente ist. Dabei ist es ferner vorteilhaft, dass die Erntegutkontaktelemente als Zähne ausgebildet sind und dass das Erntegutkontaktelement als pyramidenstumpfartiges Förderelement mit einer Förderfläche ausgebildet ist, deren geometrische Verlängerung mit Bezug auf die Umfangsrichtung der Dresch-und Trenntrommel die spiralförmige Bewegungsbahn des Erntegutes in einem spitzen Winkel schneidet. Durch die vorteilhafte Ausbildung der einzelnen hintereinander gestaffelt angeordneten Förderelemente wird eine einwandfreie Förderung des Erntegutes gewährleistet, wobei jeweils die einzelnen Förderflächen derart auf das Erntegut einwirken, dass sie es in Verbindung mit den Führungselementen im Dresch- und Trenntrommelgehäuse spiralförmig durch das Gehäuse bewegen und dabei vermeiden, dass sich das Erntegut verfilzt bzw. verwickelt oder zu einem Gutsstrang formt, der zu einer erhöhten Leistungsaufnahme der Antriebsvorrichtung zum Antrieb der Dresch- und Trenntrommel führt.

Hierbei ist es besonders vorteilhaft, dass die Förderfläche des Förderelementes eine stromabwärts liegende Führungskante und eine stromaufwärts liegende Kante aufweist, deren unterste Stelle am Fuss des Förderelementes einen kleineren Abstand zur stromaufwärts verlaufenden Bewegungsbahn des Erntegutes aufweist als die unterste Stelle der stromabwärts liegenden Kante. Da die vorne liegende Kante des Förderelementes zuerst Kontakt mit dem stromabwärts liegenden Erntegutstrom hat, wirken diese Kanten derart aggressiv auf das Erntegut ein, dass beispielsweise ein sich bildender Gutsstrang derart gestört wird, dass er sich bei fortlaufender Einwirkung der einzelnen Förderelemente auflöst. Um eine Gutsstrangbildung weiterhin zu verhindern, ist es vorteilhaft, dass die Förderelemente zur Durchtrennung des Erntegutes mit Messerteilen versehen sind. Durch die Verwendung auswechselbarer Messerteile an den einzelnen Förderelementen kann das Erntegut so zerkleinert werden, dass eine Gutsstrangbildung des Erntegutes nicht auftreten kann.

Die durch die einzelnen Förderelemente gebildete Schneckenwendel muss mit Bezug auf den Verlauf einer normalen Schneckenwendel zur Förderung von Gut durch ein Gehäuse als negativ drehend angesehen werden. Eine negativ drehende, durchgehende Schneckenwendel würde das Erntegut normalerweise nicht stromabwärts, sondern stromaufwärts fördern. Da aber nur die Verbindungslinie aller Förderelemente und nicht die jeweiligen Förderflächen eine Schneckenwendel bildet, durchkämmen die schräg gestellten Förderelemente das Erntegut und verhindern dabei eine Gutsstrangbildung, gleichzeitig wirken sie auch auf das Erntegut derart ein, dass sie das Erntegut in Verbindung mit den spiralförmigen Führungselementen durch das Dresch- und Trenntrommelgehäuse bewegen. Die durch Förderelemente gebildete Schneckenwendel weist den gleichen Verlauf auf wie das im Dresch- und Trenntrommelgehäuse angeordnete schneckenförmige Führungselement.

Nach einem weiteren Merkmal der Erfindung ist es vorteilhaft, dass neben der ersten Reihe mit auf dem Dresch- und Trennteil vorgesehenen Förderelementen mindestens eine weitere parallel zur ersten Reihe verlaufende Reihe mit Förderelementen auf dem Dresch- und Trennteil vorgesehen ist. Da jeweils zwischen zwei nebeneinander liegenden, sich in Axialrichtung der Dresch- und Trenntrommel erstreckenden Dreschleisten zwei Reihen mit Förderlementen vorgesehen sind, die auf einer Schneckenwendel verlaufen, erhält man eine sehr gute Förderleistung ohne Gutsstrangbildung. Vorteilhaft ist es ferner, dass mehrere hintereinander angeordnete Förderelemente einen Teil einer unterbrochenen Schneckenwendel bilden, die jeweils zwischen zwei parallel zur Längsachse der Dresch- und Trenntrommel verlaufenden Dreschleisten angeordnet sind. Dabei ist es ausserdem vorteilhaft, dass die durch die Förderelemente gebildete unterbrochene Schneckenwendel mit der jeweiligen Förderfläche des Förderelementes einen spitzen Winkel bildet, der in Umlaufrichtung offen ist. Ferner ist es möglich, dass die durch die Förderelemente gebildete Schneckenwendel mit der jeweiligen Förderfläche einen rechten Winkel bildet. Der Winkel, der zwischen der Förderfläche und der Schneckenwendel gebildet wird, kann verschieden gross ausgelegt werden, je nachdem, ob das Erntegut schnell oder langsam durch das Dresch- und Trenntrommelgehäuse bewegt werden soll. Damit ein Schlupf des Erntegutes bei der Förderung durch das Dresch- und Trenntrommelgehäuse klein gehalten bzw. vermieden wird, sind die Förderelemente in vorteilhafter Weise so angeordnet, dass ihre Förderflächen jeweils die Rückseite des vorausgehenden Förderelementes mit Bezug auf die Förderrichtung der Dresch- und Trenntrommel zumindest teilweise überlappen. Auf diese Weise bilden die hintereinander angeordneten einzelnen Förderelemente in Förderrichtung eine grosse Förderfläche, wobei die einzelnen vorderen Kanten der Förderelemente eine aggressive Oberfläche bilden, die auf das Erntegut derart einwirken, dass eine Verfilzung des Erntegutes ausgeschaltet werden kann.

Nach einem weiteren Merkmal der Erfindung ist es vorteilhaft, dass die Förderfläche des entsprechenden Förderelementes mit der Längsachse der Dresch- und Trenntrommel einen Winkel grösser als 0° und kleiner als 90° bildet. Ferner ist es vorteilhaft, dass die Förderelemente mit Bezug auf die Drehrichtung relativ schmal ausgebildet und hintereinander in Gruppen auf Trageelementen angeordnet sind, die lösbar mit der Dresch- und Trenntrommel verbunden sein können. Durch die Verwendung der Gruppenbauweise der einzelnen Förderelemente können diese auf kostensparende Weise auch bei Beschädigungen ohne weiteres ausgewechselt werden und in kürzester Zeit durch eine neue Gruppe von einzelnen Förderelementen ersetzt werden.

Die auf der sich in Längsrichtung des Mähdreschers erstreckenden Dreschtrommel angeordneten Förderelemente können auch auf einer anderen Dreschtrommel angeordnet werden, die beispielsweise quer zur Fahrtrichtung des Mähdreschers verläuft, wobei jedoch das Erntegut in Längsrichtung der Trommel weiterbewegt wird.

Vorteilhaft ist es ferner, dass das Förderelement eine stromabwärts liegende, geneigt verlaufende Kante aufweist, die mit der Oberfläche der Dresch- und Trenntrommel einen spitzen Winkel einschliesst. Verlaufen die Förderelemente in etwa parallel zur Längsachse der Dresch- und Trenntrommel oder bildet die entsprechende Förderfläche einen relativ kleinen Winkel mit der Längsachse der Dresch- und Trenntrommel, dann wird durch die schräge Kante gewährleistet, dass das Erntegut an dieser Kante entlanggleitet und somit nicht am Förderelement hängen bleibt.

In der Zeichnung sind mehrere Ausführungsbeispiele einer Dresch- und Trenntrommel nach der Erfindung schematisch dargestellt. Es zeigt:

Fig. 1 eine Seitenansicht eines Mähdreschers nach dem Axialflussprinzip;
Fig. 2 eine Dresch- und Trenntrommel mit den im Dresch- und Trennbereich vorgesehenen Förderelementen;
Fig. 3 eine Abwicklung der Dresch- und Trenntrommel gemäss Fig. 2;
Fig. 4a, 4b, 4c verschiedene Anordnungen der hintereinander angeordneten Förderelemente auf der Dresch- und Trenntrommel;
Fig. 5 einen Längsschnitt entlang der Linie 5/5 gemäss Fig. 7;
Fig. 6 eine Teilabwicklung der Dresch- und Trenntrommel ähnlich wie in Fig. 3;
Fig. 7 ein weiteres Ausführungsbeispiel der Dresch- und Trenntrommel mit sich in Axialrichtung erstreckenden Dresch-und Trennleisten;

Fig. 8 ein drittes Ausführungsbeispiel einer Dresch- und Trenntrommel;

Fig. 9 ein einzelnes Förderelement, das mit der Längsachse der Dresch- und Trenntrommel einen spitzen Winkel bildet;

Fig. 10 ein weiteres Ausführungsbeispiel der Förderelemente;

Fig. 11 eine Abwicklung der Dresch- und Trenntrommel entlang der Linie 11–11 gemäss Fig. 10;

Fig. 12 ein weiteres Ausführungsbeispiel der Förderelemente, ähnlich wie sie in Fig. 2 dargestellt sind.

In der Zeichnung ist mit 10 ein Mähdrescher bezeichnet, der nach dem Axialflussprinzip arbeitet und der zwei vordere Laufräder 12 und zwei hintere steuerbare Räder 14 aufweist. Am vorderen Ende weist der Mähdrescher 10 eine Erntebergungsvorrichtung 16 auf, über die das Erntegut aufgenommen wird und einer im Mähdrescher vorgesehenen Dresch- und Trennvorrichtung 18 zugeführt wird. Das aus der Dresch- und Trennvorrichtung 18 ausgeschiedene Erntegut wird einer Reinigungsvorrichtung 20 und das gereinigte Erntegut einem Sammelbehälter 22 zugeführt. Das ausgedroschene Stroh wird am hinteren Ende 24 der Dresch- und Trennvorrichtung 18 ausgeschieden.

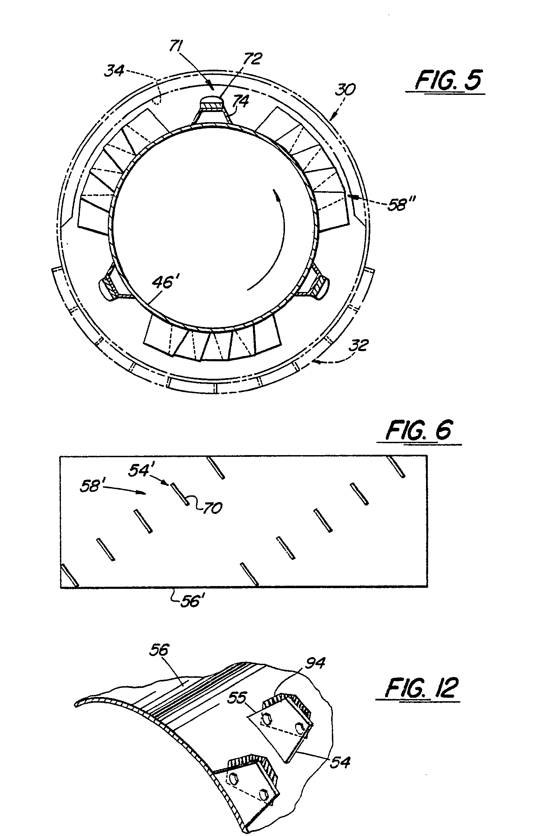

Zur Dresch- und Trennvorrichtung gehört ein zylindrisch ausgebildetes Dresch- und Trenntrommelgehäuse 30, das zumindest teilweise als Dresch- und Trennkorb 32 ausgebildet ist (Fig. 5). An der inneren Oberfläche des Dresch- und Trenntrommelgehäuses 30 befinden sich mehrere hintereinander angeordnete schneckenförmig verlaufende Führungselemente 34. Im Dresch- und Trenntrommelgehäuse 30 ist koaxial eine Dresch- und Trenntrommel 36 drehbar gelagert und wird mittel- oder unmittelbar über eine am hinteren Ende des Mähdreschers 10 vorgesehene Verbrennungskraftmaschine 38 angetrieben. Die im Ausführungsbeispiel dargestellte Dresch- und Trenntrommel 30 erstreckt sich in Längsrichtung, d.h. in Fahrtrichtung des Mähdreschers. Es ist jedoch auch möglich, eine derartige Dresch- und Trenntrommel quer zur Fahrtrichtung des Mähdreschers anzuordnen und beispielsweise im vorderen Bereich des Mähdreschers 10 bzw. in der Erntebergungsvorrichtung 16 zu integrieren, wobei das am Ende der Dresch-und Trenntrommel ausgeschiedene Erntegut so umgelenkt werden kann, dass es einer nachgeschalteten Reinigungsvorrichtung aufgegeben werden kann.

Die Dresch- und Trenntrommel 36 ist in drei funktionsmässig unterschiedliche Abschnitte aufgeteilt, und zwar besteht sie aus einem Aufnahmeteil 40, einem Dreschteil 42 sowie einem Trennteil bzw. Abgabeteil 44. Es wird jedoch darauf hingewiesen, dass bereits im Dreschteil 42 auch eine Trennung des Erntegutes vom Stroh vorgenommen wird und über den Dresch- und Trenntrommelkorb abgeschieden wird. Der Rahmen bzw. der Dresch- und Trenntrommelkörper 46 ist bis auf den Aufnahmeteil 40 zylinderförmig ausgebildet. Der Aufnahmeteil besteht aus einem Kegelstumpf 48, der fest mit dem Dresch-und Trenntteil

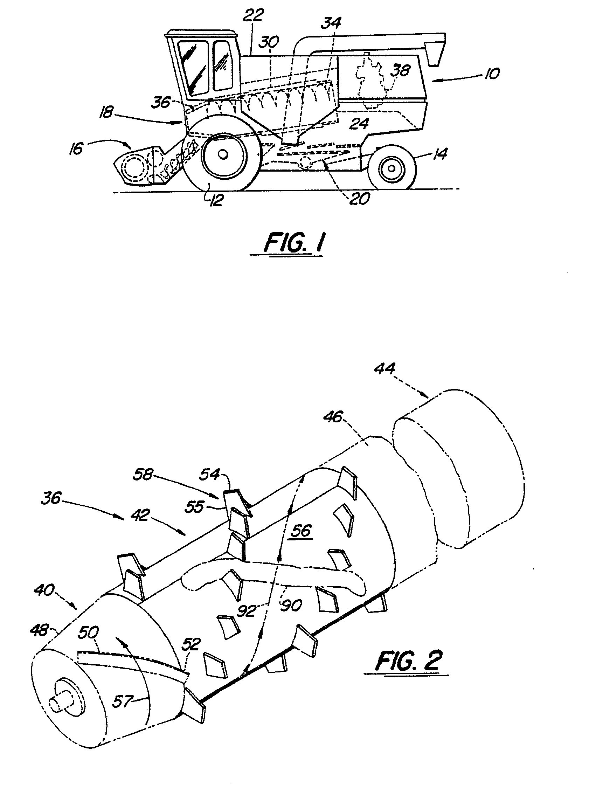

42 verbunden ist. Der Aufnahmeteil 40 nimmt das Erntegut aus der Erntebergungsvorrichtung 16 auf und führt es mittels der auf dem Kegelstumpf 48 angeordneten, in gestrichelten Linien dargestellten Förderelemente 50 (Fig. 2) axial stromabwärts. Das stromabwärts liegende Ende 52 des Förderelementes reicht etwas in den Bereich des Dresch- und Trennteiles 42 hinein.

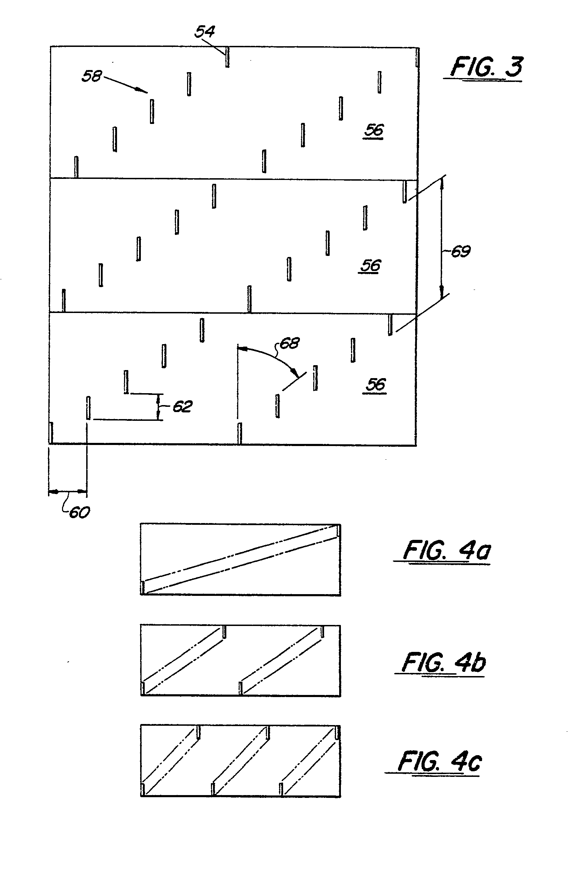

Der Dresch- und Trennteil 42 weist zahlreiche am Aussenumfang des Dresch- und Trennkörpers 46 angeordnete dorn- bzw. zahnartige Förderelemente 54 auf, die zueinander ausgerichtet sind, wobei zumindest die Verbindungslinie aller Förderelemente eine Schneckenwendel bildet. Ein jedes Förderelement 54 weist eine Führungskante 55 auf, die mit Bezug auf die Drehrichtung (siehe Pfeil 57) nach hinten geneigt verläuft. Die hintereinander angeordneten Förderelemente 54 können auf drei nebeneinander angeordneten bogenförmigen Trägern 56 in Gruppen angeordnet sein (Fig. 3), die auf dem Dresch- und Trenntrommelkörper (Fig. 2, 3) befestigt sind. Auf diese Weise ist es möglich, die Träger 56 ohne weiteres ein- und auszubauen und somit die Charakteristik der Dresch- und Trenntrommel 36 durch Einbau anderer Förderelemente zu verändern, ohne dass hierzu an den übrigen Teilen der Dresch- und Trenntrommel eine Veränderung vorgenommen zu werden braucht. Die Träger 56 lassen sich mit unterschiedlich ausgebildeten und angeordneten Förderelementen für gleich ausgebildete Dresch- und Trenntrommelkörper 46 verwenden. Die gesamte Abwicklung des Dresch- und Trennteiles 42 ist in Fig. 3 veranschaulicht, aus der hervorgeht, dass ein jeder Träger 56 zwei Reihen bzw. Gruppen 58 mit Förderelementen 54 aufweist. In jeder Gruppe 58 weisen die Förderelemente 54 in Umfangsrichtung einen gleichmässigen Abstand zueinander auf. Die Abstände der Förderelemente 54 sind in Fig. 3 durch die Bezugsziffern 60 und 62 gekennzeichnet. Die axiale Gliederung der einzelnen Förderelemente ist so gewählt, dass die eine Gruppe 58 gegenüber der nachfolgenden Gruppe um ca. ein Drittel des axialen Abstandes 60 zwischen zwei Förderelementen 54 versetzt ist, so dass die Förderelemente 54 jeweils einen axialen Zwischenraum untereinander aufweisen und mit Bezug auf den Dresch- und Trenntrommelkörper 46 jeweils eine besondere Stellung einnehmen. Der Antigutsstrangeffekt wird am besten dadurch realisiert, wenn die Anzahl der Zähne nicht grösser ist, als die Anzahl der Zähne, die notwendig ist, um eine wirkungsvolle Dresch- und Trennwirkung und Förderwirkung zu erzielen. Durch die Beibehaltung eines Minimumaxilabstandes zwischen den einzelnen Förderelementen 54 erhält man eine Anordnung der Förderelemente, wie sie in Fig. 2 und 3 veranschaulicht ist. Auf diese Weise wird gewähreleistet, dass die einzelnen Förderelemente das Erntegut ohne weiteres durch das Dresch- und Trenntrommelgehäuse leiten, ohne dass es nach hinten durchrutscht.

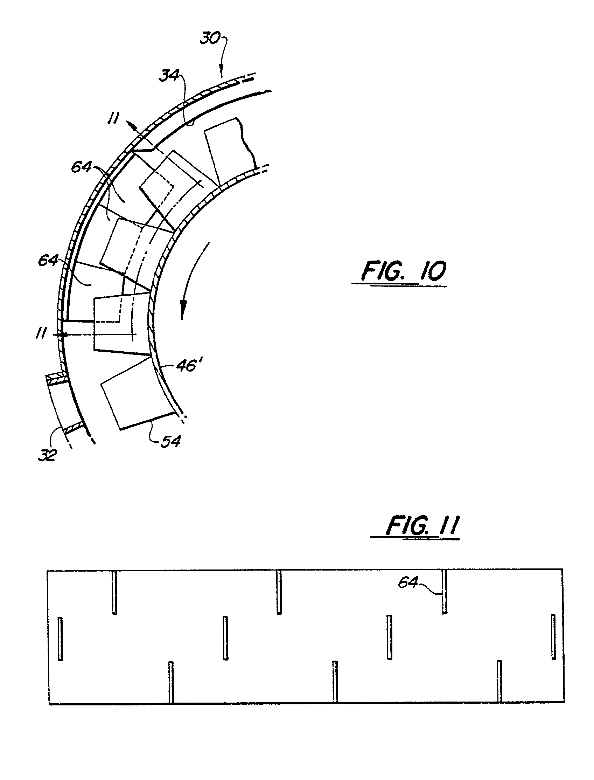

Die soeben beschriebenen Förderelemente 54 (Fig. 2 und 3) wirken mit an der Innenoberfläche des Dresch- und Trenntrommelkorbes 32 vorgesehenen Zähnen 64 zusammen (Fig. 10 und 11). Die einzelnen Zähne 64 sind, wie aus Fig. 11 hervorgeht, gestaffelt angeordnet und verhindern somit eine Gutsstrangbildung. Sie weisen einen derart grossen Abstand auf, dass die Förderelemente 54 ohne weiteres dicht durch die von zwei Zähnen gebildeten Zwischenräume wandern können. Das Zusammenwirken der Zähne 64 mit den Förderelementen 54 unterstützt den Dreschvorgang zwischen den Förderelementen 54 und den Zähnen 64 sowie dem Dreschkorb 32. Mit Bezug auf die Drehrichtung der Dresch- und Trenntrommel 32 und die axiale Einteilung (stromabwärts) sind die einzelnen Gruppen 58 der Förderelemente 54 (Fig. 2 und 3) so zueinander ausgerichtet, dass sie eine negativ drehende Schneckenwendel bilden, die deshalb so bezeichnet wird, da bei einer durchgehenden Schneckenwendel an Stelle der in einer Reihe angeordneten Förderelemente 54 das von der Schneckenwendel erfasste Erntegut stromaufwärts und nicht stromabwärts bewegt würde. Die negativ drehende bzw. gegenläufige Schneckenwendel (der Steigungswinkel ist in Fig. 3 durch die Bezugsziffer 68 angegeben) ist ein wesentliches Merkmal der Erfindung.

Der soeben beschriebene Winkel bzw. Steigungswinkel 68 der Schneckenwendel beeinflusst den Steigungswinkel des Bewegungsbahn des sich durch das Dresch- und Trenntrommelgehäuse bewegenden Erntegutes. Der axiale Abstand 60 und 62 zwischen den Förderelementen 54 und zwischen den einzelnen Gruppen 58 auf dem Träger 56 ist so zu wählen, dass man die beste Annäherung an den idealen Steigungswinkel erhält, mit dem neben der Vermeidung einer Gutsstrangbildung eine einwandfreie Förderung des Erntegutes möglich ist. Verschiedene Anordnungen der Förderelemente 54 sind in den Fig. 4a bis 4c veranschaulicht. Die Anordnung gemäss Fig. 4b entspricht der Anordnung der Förderelemente gemäss Fig. 2 und 3. Es wird darauf hingewiesen, dass bei einer derartigen Anordnung die Förderelemente 54 in Axialrichtung einen relativ kleinen Abstand untereinander aufweisen, während sie in Umfangsrichtung einen relativ grossen Abstand aufweisen. Eine derartige Anordnung bzw. Verteilung der Förderelemente 54 trägt dazu bei, die Drehmomentenspitzen klein zu halten, die durch das Zusammenwirken der Förderelemente der Dresch-und Trenntrommel 36 mit dem Dresch- und Trennkorb 32 bzw. den Zähnen 64 hervorgerufen werden können.

Eine andere Anordnung der auf den Trägern 56' in Gruppen 58' angeordneten Förderelemente 54' ist in Fig. 6 veranschaulicht. Der Steigungswinkel der Förderelemente untereinander ist so gewählt, dass die Förderfläche 70 das Erntegut stromabwärts bewegt, um somit den Effekt des Führungselementes 34 am Dresch- und Trenntrommelgehäuse 30 zu unterstützen.

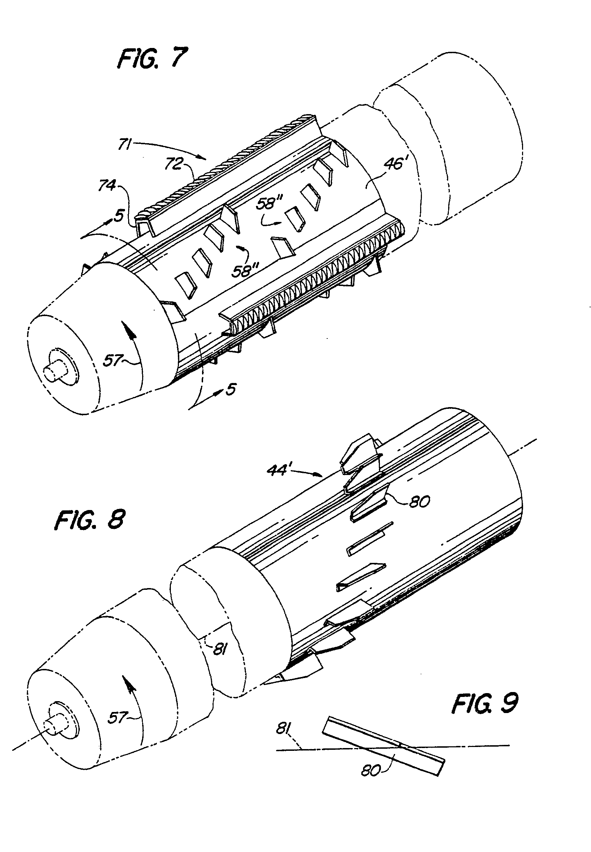

Ein weiteres Ausführungsbeispiel (Fig. 5 und 7) zeigt eine gegenläufige Schneckenwendelanordnung mit in Gruppen 58'' angeordneten Förderelementen in Verbindung mit sich axial erstreckenden Dreschelementen 71. Im Ausführungsbeispiel gemäss Fig. 5 und 7 sind drei einen gleichmässigen Abstand untereinander aufweisende Dreschleisten 72 auf dem Gehäuse 46' mittels eines Trägers 74 befestigt. Der Steigungswinkel des einzelnen Förderelementes 80 (Fig. 9) ist mit Bezug auf die Längsachse 81 der Dresch- und Trenntrommel 36 so gewählt, dass das Förderelement 80 mit der Längsachse 81 einen spitzen Winkel bildet, wobei die Förderfläche des Förderelementes 80 stromabwärts gerichtet ist. Ferner sind die Förderelemente 80 stromabwärts gestaffelt angeordnet.

Im Arbeitseinsatz verhindern die auf der Dresch- und Trenntrommel 36 vorgesehenen nach aussen gerichteten Erntegutkontaktelemente bzw. Förderelemente 54, 54', die mit Bezug auf die Drehrichtung der Dresch- und Trenntrommel in Art einer gegenläufigen Spirale angeordnet sind, ein Verfilzen bzw. ein Verfestigen des Erntegutes, wenn dieses in Form einer Gutsmatte mittels der sich gleichmässig drehenden Dresch- und Trenntrommel 36 spiralförmig durch das Dresch-und Trenntrommelgehäuse 30 bewegt wird. Ferner wird dadurch verhindert, dass sich das Erntegut in Form eines seilförmigen Gutsstranges ausrichtet, wie dies bei konventionellen Dresch-und Trenntrommeln auftreten kann. Dieser bekannte Gutsstromverlauf ist in Fig. 2 durch die gestrichelten Linien 90 wiedergegeben. Der Gutsstrang verläuft quer bzw. rechtwinklig zu der Spirale, auf der sich fortlaufend die Erntegutmatte durch das Dresch- und Trenntrommelgehäuse 30 bewegt. Diese Richtung der Spirale des Erntegutstromes mit Bezug auf das Dresch- und Trenntrommelgehäuse wird durch die Pfeillinie 92 angegeben (Fig. 2). Die Spirale kann natürlich rechtsdrehend oder linksdrehend verlaufen. Die in Fig. 2 angegebene Spirallinie 92 wird als linksdrehend bezeichnet. Wie aus Fig. 2 hervorgeht verläuft die Gruppe 58 der Förderelemente 54 in etwa parallel zur Spirallinie 92 des Erntegutstromes durch das Gehäuse, d. h. der Erntegutstrom verläuft ebenfalls linksdrehend. Auf diese Weise bieten die Vorderflächen 70 eine minimale Angriffsfläche für den Erntegutstrom, so dass durch die messerartige Kante 55 die Bildung eines Gutsstranges verhindert wird. Das Erntegut wird also über eine unterbrochene nach hinten gestaffelte Förderfläche weiterbewegt und nicht über eine relativ breite, durchgehende Förderfläche.

Die Anordnung der Förderelemente sowie ihre Dimensionierung kann unterschiedlich gewählt werden. Es hat sich jedoch als besonders vorteilhaft herausgestellt, die Dresch- und Trenntrommel 30 mit einem Durchmesser von 650 mm zu versehen und die Förderelemente 54, 75–90 mm hoch auszubilden, wobei der Abstand zwischen dem Aussenumfang aller Förderelemente 54 und der Innenoberfläche des Dresch- und Trenntrommelgehäuses 30 eine Spaltbreite zwischen 35 und 50 mm bildet, während die Führungselemente 34 in etwa 25 mm hoch sind. Der radiale Spalt zwischen dem Dresch- und Trenntrommelgehäuse 30 bzw. dem Dresch- und Trenntrommelkorb 32 und den Förderelementen 54 bzw. den Dreschleisten 72 beträgt zwischen 35 und 50 mm (Fig. 5).

Die nach hinten geneigt verlaufende Führungskante 55 des Führungselementes 54 bildet mit der Radialebene einen Winkel von 50° oder mehr.

Die Antigutsstrangcharakteristik mag dadurch erhöht werden, dass Messer 94 an den Förderelementen 54 (Fig. 12) vorgesehen werden, die den Erntegutstrom durchschneiden und die Länge des Strohs vermindern. Wie aus Fig. 12 hervorgeht, können die Messer 94 an ihren Schneidkanten gezahnt und so ausgebildet sein, dass einmal die Führungskante und einmal die nachlaufende Kante als Schneidkante einsetzbar sind. Die Messer 94 sind mittels Schraubenbolzen mit einer Halterung lösbar verbunden.

**Patentansprüche**

1. Dresch- und Trenntrommel für einen nach dem Axialflussprinzip arbeitenden Mähdrescher mit einem zumindest teilweise Abscheideöffnungen und Führungselemente (34) aufweisenden Dresch- und Trenntrommelgehäuse (30), in dem die Dresch- und Trenntrommel (36) drehbar gelagert ist, die zahlreiche in Axial- und Umfangsrichtung mit Abstand zueinander angeordnete, in etwa aufrechtstehende Erntegutkontaktelemente, z.B. Förderelemente (54), aufweist, die mit auf der Dresch-und Trenntrommel vorgesehenen Trenn- bzw. Dreschelementen (72) sowie mit den Führungselementen (34) zusammenwirken und in Art einer Schneckenwendel auf der Dresch- und Trenntrommel, insbesondere in einem Bereich zwischen einem Aufnahmeteil (40) und einem Abgabeteil (44) der Dresch- und Trenntrommel, angeordnet sind, dadurch gekennzeichnet, dass die einzelnen in einer Reihe hintereinander angeordneten Erntegutkontaktelemente, z.B. Förderelemente (54), in Umlaufrichtung der Dresch- und Trenntrommel (36) zeigen und die die einzelnen Erntegutkontaktelemente miteinander verbindende Linie eine negativ bzw. in Drehrichtung verlaufende Spirallinie (92) bildet, so dass die durch die Erntegutkontaktelemente, z.B. Förderelemente (54), gebildete Schneckenwendel und die Bewegungsbahn des Erntegutes durch das Dresch- und Trenntrommelgehäuse (30) gleichsinnig verlaufen.

2. Dresch- und Trenntrommel nach Anspruch 1, dadurch gekennzeichnet, dass die durch die Erntegutkontaktelemente, z.B. Förderelemente (54), gebildete Schneckenwendel gleichsinnig zur Drehrichtung der Dresch- und Trenntrommel (36) verläuft.

3. Dresch- und Trenntrommel nach einem oder mehreren der vorherigen Ansprüche, dadurch gekennzeichnet, dass die Erntegutkontaktelemente, z.B. Förderelemente (54), als Zähne ausgebildet sind.

4. Dresch- und Trenntrommel nach einem oder mehreren der vorherigen Ansprüche, dadurch gekennzeichnet, dass das Erntegutkontaktelement als pyramidenstumpfartiges Förderelement (54) mit einer Förderfläche (70) ausgebildet ist, deren geometrische Verlängerung mit Bezug auf die Umfangsrichtung der Dresch- und Trenntrommel (36) die spiralförmige Bewegungsbahn (92) des Erntegutes in einem spitzen Winkel schneidet.

5. Dresch- und Trenntrommel nach einem oder mehreren der vorherigen Ansprüche, dadurch gekennzeichnet, dass die Förderfläche (70) des Förderelementes (54) eine stromabwärts liegende Führungskante (55) und eine stromaufwärts liegende Kante aufweist, deren unterste Stelle am Fuss des Förderelementes einen kleineren Abstand zur stromaufwärts verlaufenden Bewegungsbahn (92) des Erntegutes aufweist als die unterste Stelle der stromabwärts liegenden Kante.

6. Dresch- und Trenntrommel nach einem oder mehreren der vorherigen Ansprüche, dadurch gekennzeichnet, dass das oder die Förderelemente (54) im Bereich ihres Aussenumfanges je ein Messerelement (94) aufweisen.

7. Dresch- und Trenntrommel nach einem oder mehreren der vorherigen Ansprüche, dadurch gekennzeichnet, dass die durch die Förderelemente (54) gebildete Schneckenwendel den gleichen Verlauf aufweist wie das im Dresch- und Trenntrommelgehäuse (30) angeordnete schneckenförmige Führungselement (34).

8. Dresch- und Trenntrommel nach einem oder mehreren der vorherigen Ansprüche, dadurch gekennzeichnet, dass neben der ersten Reihe mit auf dem Dresch- und Trennteil (42) vorgesehenen Förderelementen (54) mindestens eine weitere parallel zur ersten Reihe verlaufende Reihe mit Förderelementen (54) auf dem Dresch- und Trennteil vorgesehen ist.

9. Dresch- und Trenntrommel nach einem oder mehreren der vorherigen Ansprüche, dadurch gekennzeichnet, dass mehrere hintereinander angeordnete Förderelemente (54) einen Teil einer unterbrochenen Schneckenwendel bilden, die jeweils zwischen zwei parallel zur Längsachse (81) der Dresch- und Trenntrommel (36) verlaufenden Dreschleisten (72) angeordnet sind.

10. Dresch- und Trenntrommel nach einem oder mehreren der vorherigen Ansprüche, dadurch gekennzeichnet, dass die durch die Förderelemente (54) gebildete unterbrochene Schneckenwendel mit der jeweiligen Förderfläche (70) des Förderelementes einen spitzen Winkel bildet, der in Umlaufrichtung offen ist.

11. Dresch- und Trenntrommel nach einem oder mehreren der vorherigen Ansprüche, dadurch gekennzeichnet, dass die Förderfläche (70) eines Förderelementes (54) die Rückseite des vorangehenden Förderelementes mit Bezug auf die Förderrichtung bzw. Drehrichtung der Dresch- und Trenntrommel (36) zumindest teilweise überlappt.

12. Dresch- und Trenntrommel nach einem oder mehreren der vorherigen Ansprüche, dadurch gekennzeichnet, dass die Förderfläche (70) des entsprechenden Förderelementes (80) mit der Längsachse (81) der Dresch- und Trenntrommel (36) einen Winkel grösser als 0° und kleiner als 90° bildet.

13. Dresch- und Trenntrommel nach einem oder mehreren der vorherigen Ansprüche, dadurch gekennzeichnet, dass die Förderelemente (54) mit Bezug auf die Drehrichtung relativ schmal ausgebildet und hintereinander in Gruppen auf Trageelementen (56) angeordnet sind, die lösbar mit der Dresch- und Trenntrommel (36) verbunden sein können.

14. Dresch- und Trenntrommel nach einem oder mehreren der vorherigen Ansprüche, dadurch gekennzeichnet, dass das Förderelement (54) eine stromabwärts liegende, geneigt verlaufende Kante (55) aufweist, die mit der Oberfläche der Dresch- und Trenntrommel (36) einen spitzen Winkel einschliesst.

## Claims

1. Threshing and separating drum for a combine harvester operating on the axial flow principle and with a threshing and separating drum housing (30) having, partly at least, discharge openings and guide elements (34) and in which the threshing and separating drum (36) is rotatably mounted, the drum having numerous substantially upright harvested-material contact elements, e.g. conveying elements (54), arranged at a distance from one another in the axial and circumferential directions which cooperate with separating or threshing elements (72) provided on the threshing and separating drum and with the guide elements (34) and are arranged after the fashion of a helix on the threshing and separating drum, in particular in a zone between a receiving section (40) and a delivery section (44) of the threshing and separating drum, characterised in that the individual harvested-material contact elements, e.g. conveying elements (54), arranged in a row one behind the other, point in the direction of rotation of the threshing and separating drum (36) and the line connecting the individual harvested-material contact elements to one another forms a spiral line (92) extending negatively or in the direction of rotation, so that the helix formed by the harvested-material contact elements, e.g. conveying elements (54), and the path of movement of the harvested material through the threshing and separating drum housing (30) extend in the same direction.

2. Threshing and separating drum according to claim 1, characterised in that the helix formed by the harvested-material contact elements, e.g. conveying elements (54), extends in the same direction as that of rotation of the threshing and separating drum (36).

3. Threshing and separating drum according to one or more of the preceding claims, characterised in that the harvested-material contact elements, e.g. conveying elements (54), are in the form of teeth.

4. Threshing and separating drum according to one or more of the preceding claims, characterised in that the harvested-material contact element is in the form of a truncated-pyramid-like conveying element (54) with a conveying surface (70) whose geometrical extension with respect to the circumferential direction of the threshing and separating drum (36) intersects the spiral path of movement (92) of the harvested material at an acute angle.

5. Threshing and separating drum according to one or more of the preceding claims, characterised in that the conveying surface (70) of the conveying element (54) has a downstream guide edge (55) and an upstream edge whose lowest point at the foot of the conveying element is at a smaller distance from the path of movement (92) of the harvested material, which extends upstream, than the lowest point of the downstream edge.

6. Threshing and separating drum according to one or more of the preceding claims, characterised in that the conveying element or elements (54) has or each have a cutter element (94) in its or their peripheral zone.

7. Threshing and separating drum according to one or more of the preceding claims, characterised in that the helix formed by the conveying elements (54) has the same course as the helical guide element (34) arranged in the threshing and separating drum housing (30).

8. Threshing and separating drum according to one or more of the preceding claims, characterised in that in addition to the first row of conveying elements (54) provided on the threshing and separating section (42), at least one more row of conveying elements (54) extending parallel to the first row is provided on the threshing and separating section.

9. Threshing and separating drum according to one or more of the preceding claims, characterised in that a plurality of conveying elements (54) arranged one behind the other form part of an interrupted helix arranged in each case between two threshing bars (72) extending parallel to the longitudinal axis (81) of the threshing and separating drum (36).

10. Threshing and separating drum according to one or more of the preceding claims, characterised in that the interrupted helix formed by the conveying elements (54) forms with the respective conveying surface (70) of the conveying element an acute angle which is open in the direction of rotation.

11. Threshing and separating drum according to one or more of the preceding claims, characterised in that the conveying surface (70) of a conveying element (54) at least partially overlaps the back of the preceding conveying element with respect to the direction of conveyance or rotation of the threshing and separating drum (36).

12. Threshing and separating drum according to one or more of the preceding claims, characterised in that the conveying surface (70) of the corresponding conveying element (80) forms an angle greater than 0° and smaller than 90° with the longitudinal axis (81) of the threshing and separating drum (36).

13. Treshing and separating drum according to one or more of the preceding claims, characterised in that the conveying elements (54) are of relatively narrow form with respect to the direction of rotation and are arranged one behind the other in groups on supporting elements (56) which can be connected detachably to the threshing and separating drum (36).

14. Threshing and separating drum according to one or more of the preceding claims, characterised in that the conveying element (54) has a downstream inclined edge (55) which encloses an acute angle with the surface of the threshing and separating drum (36).

## Revendications

1. Tambour de battage et de séparation pour une moissonneuse-batteuse fonctionnant selon le principe de l'acheminement axial, comportant un carter de tambour de battage et de séparation (30) présentant au moins partiellement des ouvertures de séparation et des éléments de guidage (34) dans lequel le tambour de battage et de séparation (36) est monté de façon à pouvoir tourner, qui comprend plusieurs éléments de contact avec les produits de récolte sensiblement verticaux, disposés avec un certain écartement en direction axiale et en direction périphérique, par exemple des éléments de transport (54), qui coopèrent avec des éléments de séparation et de battage (72) prévus sur le tambour de battage et de séparation, ainsi qu'avec les éléments de guidage (34) et sont disposés hélicoïdalement sur le tambour de battage et de séparation, en particulier dans une zone comprise entre une section de réception (40) et une section de décharge (44) du tambour de battage et de séparation, caractérisé en ce que les différents éléments de contact avec les produits de récolte, par exemple les éléments de transport (54), disposés les uns à la suite des autres en une série sont dirigés dans le sens de rotation du tambour de battage et de séparation (36), et en ce que la ligne reliant les différents éléments de contact avec les produits de récolte entre eux constitue une spirale d'orientation négative ou dans le sens de rotation (92), de sorte que l'hélice formée par les éléments de contact avec les produits de récolte, par exemple les éléments de transport (54), et la trajectoire de déplacement des produits de récolte s'étendent dans le même sens à travers le carter (30) du tambour de battage et de séparation.

2. Tambour de battage et de séparation selon la revendication 1, caractérisé en ce que l'hélice formée par les éléments de contact avec les produits de récolte, par exemple les éléments de transport (54), s'étend dans le même sens que le sens de rotation du tambour de battage et de séparation (36).

3. Tambour de battage et de séparation selon une ou plusieurs des revendications précédentes, caractérisé en ce que les éléments de contact avec les produits de récolte, par exemple les éléments de transport (54), sont conformés en dents.

4. Tambour de battage et de séparation selon une ou plusieurs des revendications précédentes, caractérisé en ce que l'élément de contact avec les produits de récolte est conformé en élément de transport en forme de tronc de pyramide (54) pourvu d'une surface de transport (70) dont le prolongement géométrique coupe la trajectoire de déplacement en spirale (92) des produits de récolte suivant un angle aigu par rapport à la direction périphérique du tambour de battage et de séparation (36).

5. Tambour de battage et de séparation selon une ou plusieurs des revendications précédentes, caractérisé en ce que la surface de transport (70) de l'élément de transport (54) comporte une arête de guidage (55) placée en aval et une arête placée en amont dont le point le plus bas situé sur la base de l'élément de transport est à une plus faible distance de la trajectoire de déplacement (92) des produits de récolte orientée vers l'amont que le point le plus bas de l'arête située en aval.

6. Tambour de battage et de séparation selon une ou plusieurs des revendications précédentes, caractérisé en ce que l'élément ou les éléments de transport (54) comportent chacun un élément en forme de lame (94) dans la zone de sa périphérie extérieure.

7. Tambour de battage et de séparation selon une ou plusieurs des revendications précédentes, caractérisé en ce que l'hélice formée par les éléments de transport (54) a la même allure que l'élément de guidage hélicoïdal (34) placé dans le carter (30) du tambour de battage et de séparation.

8. Tambour de battage et de séparation selon une ou plusieurs des revendications précédentes, caractérisé en ce qu'il est prévu, en plus de la première série d'éléments de transport (54) prévus sur la section de battage et de séparation (42), au moins une autre série d'éléments de transport (54) parallèle à la première série sur la section de battage et de séparation.

9. Tambour de battage et de séparation selon une ou plusieurs des revendications précédentes, caractérisé en ce que plusieurs éléments de transport (54) disposés l'un derrière l'autre forment une partie d'une hélice discontinue disposée dans chaque cas entre deux barres de battage (72) s'étendant parallèlement à l'axe longitudinal (81) du tambour de battage et de séparation (36).

10. Tambour de battage et de séparation selon une ou plusieurs des revendications précédentes, caractérisé en ce que l'hélice discontinue formée par les éléments de transport (54) fait avec la surface de transport (70) de chaque éléments de transport un angle aigu ouvert dans le sens de rotation.

11. Tambour de battage et de séparation selon une ou plusieurs des revendications précédentes, caractérisé en ce que la surface de transport (70) d'un élément de transport (54) chevauche au moins partiellement la face postérieure de l'élément de transport précédent par rapport au sens de transport ou au sens de rotation du tambour de battage et de séparation (36).

12. Tambour de battage et de séparation selon une ou plusieurs des revendications précédentes, caractérisé en ce que la surface de transport (70) de l'élément de transport correspondant (80) fait avec l'axe longitudinal (81) du tambour de battage et de séparation (36) un angle supérieur à 0° et inférieur à 90°.

13. Tambour de battage et de séparation selon une ou plusieurs des revendications précédentes, caractérisé en ce que les éléments de transport (54) sont relativement étroits, en se référant au sens de rotation et sont disposés l'un derrière l'autre par groupes sur des éléments de support qui peuvent être reliés de façon amovible au tambour de battage et de séparation (36).

14. Tambour de battage et de séparation selon une ou plusieurs des revendications précédentes, caractérisé en ce que l'élément de transport (54) comporte une arête (55) inclinée située en aval, faisant avec la surface du tambour de battage et de séparation (36) un angle aigu.

0 057 380

FIG. 1

FIG. 2

11

FIG. 3

FIG. 4a

FIG. 4b

FIG. 4c

FIG. 5

71

72

34

74

30

58"

46'

32

FIG. 6

58'

54'

70

56'

56

94

55

54

FIG. 12

**FIG. 7**

**FIG. 8**

**FIG. 9**

FIG. 10

FIG. 11